# EUROPEAN PATENT SPECIFICATION

(11) **EP 2 602 708 B1**
(45) Date of publication and mention of the grant of the patent: **16.09.2015**
(21) Application number: 12195374.9
(22) Date of filing: 04.12.2012
(51) Int. Cl.: G06F 3/14

(54) **A display system**
Anzeigesystem
Système d'affichage

(30) Priority: 06.12.2011 TR 201112079
(43) Date of publication of application: 12.06.2013
(73) Proprietor: Vestel Elektronik Sanayi ve Ticaret A.S., 45030 Manisa (TR)
(72) Inventor: Kirisken, Barbaros, 35600 Izmir (TR); Yatir, Mustafa Nevzat, 45020 Manisa (TR)
(74) Representative: Cayli, Hülya

(56) References cited:
- EP-A1- 0 523 629
- US-A1- 2005 212 733
- US-A1- 2007 200 918
- US-A1- 2010 324 891

## Description

### Technical Field

The present invention is related to the display systems which is capable of being connected to an external audio/video device.

### Prior Art

Display systems (such as television or monitor) are able to give audio/visual output to the users. These display systems may be connected to an external audio/video device, such as a set-top-box (STB), a video player or a gaming console. As well as the display system, said external devices also comprise an audio control system. In the display system, said audio control system controls the audio output of the display system. Similarly, audio control of said external device controls the audio signal sent to the display system from said external device. When the external audio/video device, which is connected to the display system, is muted via its audio control system, there may be unwanted sound (such as humming, noise or popping) outputted from the display system. In other words, even if user wants to mute the sound of the display system, the display system may output this unwanted sound because of some imperfections and incompatibilities between the external audio/video device and the display device, such as; Low quality SCART and HDMI cable, dc level which remains on amplifier output of the external audio/video device and other kinds of noises which amplified on the display system side. In order to prevent such unwanted sound output, several techniques are used. Simple and most common solution to this problem is to use a threshold detector on the display system side The threshold detector detects sound level from external video/audio device and the audio amplifier of display device is muted when incoming sound level is below than threshold level. This approach does not generally work properly since threshold level is higher than normal sound level. So, if the threshold level is set to be high, the system can easily enable mute by failure, if the level is set to be low, then TV set will never enable hardware mute because all noise sources have higher level.

Patent document No. US 2007229717 A1 discloses a circuit for eliminating abnormal sound. Said circuit can be used in a television which is connected to a DVD player. When the sound signal of the DVD player changes, said circuit mutes the television. Thus, with said circuit, noise coming from the television is prevented. However, this method do not provides a solution for preventing noise coming from a display system when the external audio/video device (DVD) is muted.

Another patent document US2007200918A1 discloses an HDMI system comprising a source device, which generated audio and video data, and a sink device receiving data from source device. According to this document, source device is able to generate a mute flag data when audio or video is muted. According to generated mute flag data, sink device mutes audio or video.

Patent document EP0523629A1 discloses a teleconference/telephone terminal. In said terminal, audio level of at least one audio input is detected by a audio level detector. When the audio level of the input is lower than a threshold level, at least one audio output of the terminal is muted.

Patent document US2010324891A1 discloses a mute control system in an audio system comprising a audio input and audio output. Said mute control system comprises a voice activity detector that senses the mute state of audio input. According to this document, when it is detected that audio input is muted, audio output is also muted.

Patent document US2005212733A1 discloses an information processing apparatus and method, recording medium, and program. According to this document, barcodes are used for creating a communication between a display and an external device.

### Brief Description of the Invention

Present invention discloses a display system and an automatic muting method for said display system. Said display system comprises at least one audio output; at least one external input which is capable of receiving an external audio/video signal from an external audio/video device; means for processing at least one video frame received from said external audio/video device and detecting a mute symbol comprised by said video frame and means for muting the audio output of display system in case of detection of said mute symbol. Said method comprises the steps of analyzing at least an image frame received from said external audio/video device and shown in the display system; checking occurrence of a mute symbol in the image frame and muting an audio output of the display system in case of said occurrence of said mute symbol in the frame.

According to the present invention, when an external audio/video device, which is connected to said display system, is muted, display system is also muted automatically. Thus, noise coming from the display system, during the muted state of the external audio/video device, is prevented.

### Object of the Invention

An object of the present invention is to provide a display system, which is muted when the connected external audio/video device is muted, and an automatic muting method for said display system.

Another object of the present invention is to provide a display system, in which undesired sound output is prevented when the connected external audio/video device is muted, and an automatic muting method for said display system.

### Description of the Drawings

**Figure 1** shows the display system of the present invention.
**Figure 2** shows the flow chart of the muting operation of the display system of the present invention.
**Figure 3** shows the flow chart of another muting operation of the display system of the present invention.
**Figure 4** shows the flow chart of another muting operation of the display system of the present invention.

The reference numbers as used in figures may possess the following meanings;

| | |
|---|---|
| Display system | (D) |
| External audio/video device | (E) |
| Mute symbol | (S) |
| Analyzing frame | (101) |
| Checking mute symbol | (102) |
| Waiting for IR signal | (103) |
| Checking IR signal | (104) |
| Analyzing sound signal | (105) |
| Checking sudden drop | (106) |
| Muting display device | (107) |

### Detailed Description of the Invention

Display systems (such as television and monitor) are able to connect external audio/video devices (such as set top boxes, video players or gaming consoles). In a display system, in which an external audio/video device is connected, when a user mutes the external device, some noise (such as humming or popping noise) may come out from the display system. This noise may arise due to low quality of the audio cable (i.e. SCART cable or HDMI cable), which transfers audio signal of the external device to display system. Another cause of stated noise may be the DC level of the amplifier output of the external device in the mute state. This DC level is amplified on the display device amplifier and it causes humming problem. With the present invention, in order to prevent such noise, a display system with an automatic muting method is provided.

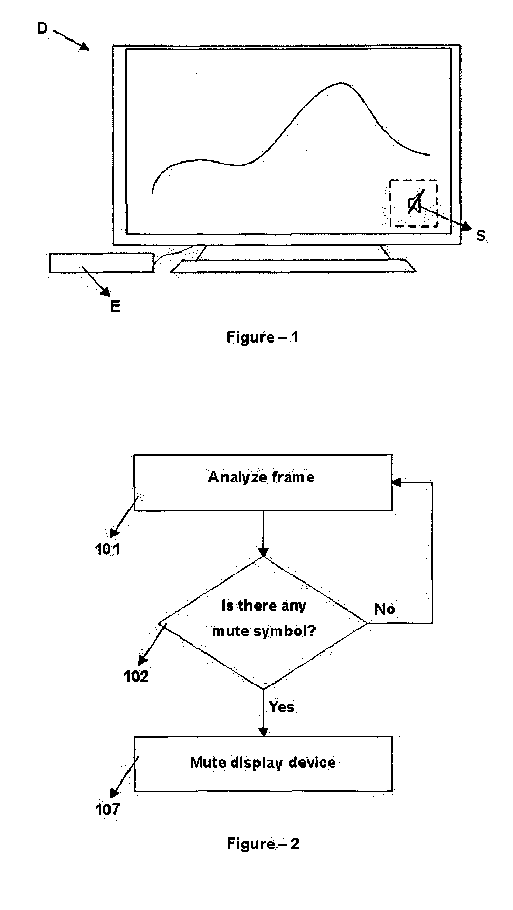

Figure 1, shows an exemplary view of the display system (D) of the present invention. The display system (D) comprises at least one audio output; at least one external input (not shown in the figures) which is capable of receiving an external audio/video signal from an external audio/video device (E); means for processing at least one frame received from said external audio/video device (E) and detecting a mute symbol (S) comprised by said frame and means for muting the audio output of display system (D) in case of detection of said mute symbol (S). When an external audio/video device (E), which is connected to a display system (D), is muted, a mute symbol (S) is generally shown in the display system (D) as on screen display (OSD). This mute symbol (S) usually comprises a speaker with a cross (X) or a slash (/) symbol on it. As shown in figure 2, according to the automatic muting method of the present invention, each frame (or one of a predetermined number of consecutive frames) shown in the display system (D) is analyzed (101) to determine whether a mute symbol (S) exist in the frame or not (102). If said mute symbol (S) is found in the frame, it is interpreted as external audio/video device (E) connected to the display system (D) is muted. Then, display system (D) is also muted (107) in order to prevent noise coming from the display system (D). Such frame analyzing (101) and checking mute symbol (102) processes are done by using any known logo detection algorithm (such as pattern match or edge detection). Preferably, after the muting display system (107), steps of analyzing frame (101) and checking mute symbol (102) are performed. Thus, when the mute symbol (S) vanishes, it is interpreted as external audio/video device (E) is un-muted and accordingly, display system (D) is also un-muted.

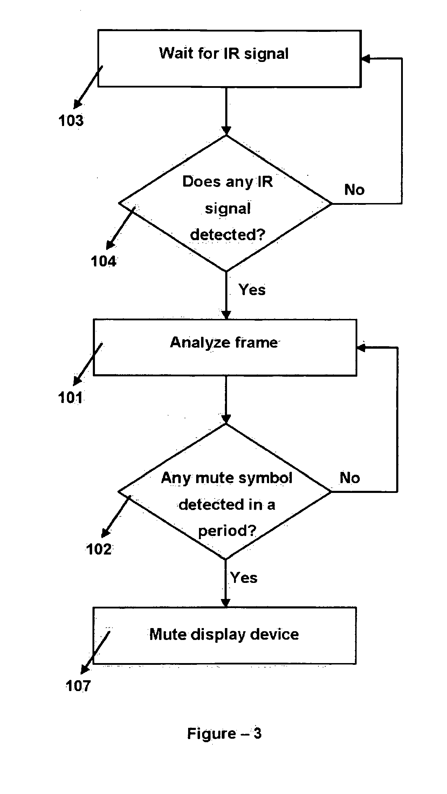

In a preferred embodiment of the present invention, display system (D) also comprises means for detecting infrared (IR) signal coming from a remote controller to detect at least one infrared signal coming from a remote controller of the external audio/video device (E) and activating said means for processing at least one video frame to detect a mute symbol (S) comprised by said video frame. In this embodiment, which is shown in figure 3, before the step of checking mute symbol (102) step, it is checked whether a remote controller of the external audio/video device (E) is used or not. This process is done by waiting for an IR signal (103) and checking whether any IR signals coming from said remote controller is detected or not (104). According to the present invention, as an infrared signal is emitted by the remote controller of the external device (E) due to use of the remote controller, the emitted signal is detected by said means for detecting IR signal coming from a remote controller. Then, frames shown in the display system (D) are analyzed (101) and it is checked for a predetermined period whether a mute symbol (S) is shown in the display system (D) or not (102). If any mute symbol (S) is not shown in the display system (D) for said predetermined period, it is interpreted as mute button of the external audio/video device (E) is not pressed. If the mute symbol (S) is detected in the display system (D), it is interpreted as said external audio/video device (E) is muted. Then, display system (D) is also muted (107) in order to prevent said noise coming from the display system (D). By detecting whether a/said button of the remote controller of the external audio/video device (E) is pressed or not, not only every frame shown in the display system (D) but a few frames (which are shown in the display system (D) during said predetermined time when a button of the remote controller of the external audio/video device (E) is pressed) are analyzed to check whether a mute symbol (S) is shown in the display system (D) or not. Thus, process load of the display system (D) is reduced.

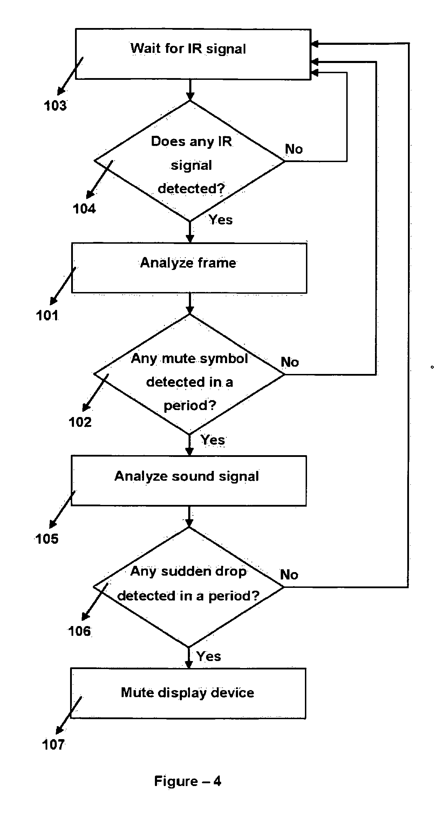

In another preferred embodiment of the present invention, the display system (D) also comprises means for detecting sound signals coming to the display system (D) from the external audio/video device (E) to detect sudden sound level change of the external audio/video device (E) and activating said means for processing at least one video frame to detect a mute symbol (S) comprised by said video frame. In this embodiment, as shown in figure 4, after the checking mute symbol (102) step, if the mute symbol (S) is detected, it is checked whether a sudden change in the sound level occurs or not. Sound signal coming from the external audio/video device (E) is analyzed (105) and it is checked whether any sudden sound level drop occurs in a predetermined period (106). If sudden sound level drop occurs during said predetermined period, it is interpreted as external audio/video device (E) is muted. Then, display system (D) is also muted (107). By checking sudden sound level change after the checking mute symbol (102) step, false mute symbol (S) detection is prevented.

According to the present invention, during the analysis of the sound signal coming from the external audio/video device (E) (105) step, the first window root mean square (RMS) values of said sound signal are calculated. Then, difference vectors for consecutive window RMS values are calculated. According to calculated difference, (i.e. whether calculated difference is lower than a predetermined threshold value or not) mute state of the external audio/video device (E) is determined.

In another preferred embodiment of the present invention, analyzing sound signal (105) and checking sudden drop (106) steps are performed before the checking mute symbol (102) step. If a sudden drop occurs, analyzing frame (102) step is performed. In this embodiment, by checking whether a sudden drop in the sound level occurs or not, only a few frames (which are shown in the display system (D) after a predetermined time) are analyzed to check whether the mute symbol (S) exists in the frame or not. Thus, process load of the display system (D) is reduced.

## Claims

1. A display system (D), which comprises at least one audio output and at least one external input which is capable of receiving an external audio/video signal from an external audio/video device (E) **characterized in that** said display system (D) further comprises;
- means for processing at least one video frame received from said external audio/video device (E) and detecting a mute symbol (S), which is shown on said display system (D) as on screen display when said external audio/video device (E) is muted, comprised by said video frame;
- means for muting the audio output of display system (D) in case of detection of said mute symbol (S).

2. A display system (D) according to claim 1 **characterized in that**; said display system (D) further comprises means for detecting infrared signal coming from a remote controller of the external audio/video device (E) and activating said means for processing at least one video frame to detect a mute symbol (S) comprised by said video frame.

3. A display system (D) according to claim 1 or 2 **characterized in that;** said display system (D) further comprises means for detecting sound signals coming to the display system (D) from the external audio/video device (E) to detect sudden sound level change of the external audio/video device (E) and activating said means for processing at least one video frame to detect a mute symbol (S) comprised by said video frame.

4. An automatic muting method for a display system (D), to which at least one external audio/video device (E) is connected, **characterized in that** said method comprises the steps of;
- analyzing at least an image frame received from said external audio/video device and shown on the display system (D) (101)
- checking occurrence of a mute symbol (S), which is shown on said display system (D) as on screen display when said external audio/video device (E) is muted, in the image frame (102)
- muting an audio output of the display system (107) in case of said occurrence of said mute symbol (S) in the frame.

5. A method according to claim 4 **characterized in that;** after the step of muting the display system (107) said method further comprises the steps of;
- analyzing at least a second frame shown in the display system (D) (101)
- checking occurrence of a mute symbol (S) in the image frame (102)
- un-muting the audio output of the display system (D) in case of non-occurrence of said mute symbol in the frame.

6. A method according to claim 4 or 5 **characterized in that;** before the step of checking the mute symbol (S) (102) said method further comprises the steps of;
- checking existence of an infrared signal transmitted by a remote controller of the external audio/video device (E)
- analyzing at least an image frame received from said external audio/video device (E) and shown in the display system (D) for a predetermined period (101) in case of existence of an infrared signal.

7. A method according to claim 4, 5 or 6 **characterized in that;** after the step of checking the mute symbol (S) (102) said method further comprises the steps of;
- analyzing sound signal coming from the external audio/video device (E) (105) if a mute symbol (S) is detected
- checking occurrence of any sudden sound level drop for a predetermined period (106)
- muting the audio output of the display system (D) (107) in case of occurrence of a sudden sound level drop.

8. A method according to claim 4, 5, 6 or 7 **characterized in that;** before the step of checking the mute symbol (S) (102) said method further comprises the steps of;
- analyzing sound signal coming from the external audio/video device (E) (105)
- checking occurrence of any sudden sound level drop for a predetermined period (106)
- analyzing at least one frame shown in the display system (D) for a predetermined period (101) in case of occurrence of a sudden sound level drop.

## Patentansprüche

1. Anzeigesystem (D) mit zumindest einer Audioausgabe und zumindest einer externen Eingabe, geeignet zum Empfangen eines externen Audio/VideoSignals von einer externen Audio/Video-Vorrichtung (E), **dadurch gekennzeichnet, dass** das Anzeigesystem (D) weiterhin umfasst:
- eine Einrichtung zur Verarbeitung von zumindest einem Videobild, empfangen von der externen Audio/Video-Vorrichtung (E) und zur Detektion eines Stummsymbols (mute symbol, S), das auf dem Anzeigesystem (D) als Bildschirmanzeige angezeigt wird, wenn die externe Audio/Video-Vorrichtung (E) stummgeschalten wird, und das von dem Videobild umfasst ist;
- eine Einrichtung zum Stummschalten der Audioausgabe des Anzeigesystems (D), falls das Stummsymbol (S) detektiert wird.

2. Anzeigesystem (D) nach Anspruch 1, **dadurch gekennzeichnet, dass** das Anzeigesystem (D) weiterhin eine Einrichtung zur Detektion eines Infrarotsignals umfasst, das von einer Fernbedienung der externen Audio/Video-Vorrichtung (E) stammt und die Einrichtung zur Verarbeitung von zumindest einem Videobild veranlasst, um ein Stummsymbol (S) zu detektieren, das von dem Videobild umfasst ist.

3. Anzeigesystem (D) nach einem der Ansprüche 1 oder 2 , **dadurch gekennzeichnet, dass** das Anzeigesystem (D) weiterhin eine Einrichtung zur Detektion von Tonsignalen umfasst, das von der externen Audio/VideoVorrichtung (E) stammend das Anzeigesystem (D) erreicht, um plötzliche oder abrupte Lautstärkeveränderungen der externen Audio/VideoVorrichtung (E) zu detektieren und die Einrichtung zur Verarbeitung von zumindest einem Videobild veranlasst, um ein Stummsymbol (S) zu detektieren, das von dem Videobild umfasst ist.

4. Verfahren zum automatischen Stummschalten für ein Anzeigesystem (D), an das zumindest eine Audio/Video-Vorrichtung (E) angeschlossen ist, **dadurch gekennzeichnet, dass** das Verfahren die Schritte umfasst:
- Analysieren von zumindest einem Einzelbild, empfangen von der externen Audio/Video-Vorrichtung und angezeigt auf dem Anzeigesystem (D) (101);
- Überprüfen des Vorhandenseins eines Stummsymbols (S), das auf dem Anzeigesystem (D) als Bildschirmanzeige in dem Einzelbild (102) angezeigt wird, wenn die externe Audio/Video-Vorrichtung (E) stummgeschalten wird;
- Stummschalten einer Audioausgabe des Anzeigesystems (107), falls das Stummsymbol (S) in dem Bild vorhanden ist.

5. Verfahren nach Anspruch 4, **dadurch gekennzeichnet, dass** nach dem Schritt des Stummschaltens des Anzeigesystems (107) das Verfahren weiterhin umfasst:
- Analysieren von zumindest einem zweiten Bild, das auf dem Anzeigesystem (D) angezeigt wird (101);
- Überprüfen des Vorhandenseins eines Stummsymbols (S) in dem Einzelbild (102);
- Rückgängig machen des Stummschaltens (un-muting) der Audioausgabe des Anzeigesystems (D), falls das Stummsymbol nicht in dem Bild vorhanden ist.

6. Verfahren nach einem der Ansprüche 4 oder 5, **dadurch gekennzeichnet, dass** vor dem Schritt des Überprüfens des Stummsymbols (S) (102) das Verfahren weiterhin umfasst:
- Überprüfen der Existenz eines Infrarotsignals, das von einer Fernbedienung der externen Audio/Video-Vorrichtung (E) übertragen wird;
- Analysieren von zumindest einem Einzelbild, empfangen von der externen Audio/Video-Vorrichtung (E) und angezeigt auf dem Anzeigesystem (D) während eines vorher festgelegten Zeitraums (101), falls ein Infrarotsignal existiert.

7. Verfahren nach einem der Ansprüche 4 bis 6, **dadurch gekennzeichnet, dass** nach dem Schritt des Überprüfens des Stummsymbols (S) (102) das Verfahren weiterhin umfasst:
- Analysieren eines Tonsignals, das von einer externen Audio/VideoVorrichtung (E) stammt (105), falls ein Stummsymbol (S) detektiert wird;
- Überprüfen des Vorhandenseins eines plötzlichen oder abrupten Lautstärkeabfalls während eines vorher festgelegten Zeitraums (106);
- Stummschalten der Audioausgabe des Anzeigesystems (D) (107), falls ein plötzlicher oder abrupter Lautstärkeabfall vorhanden ist.

8. Verfahren nach einem der Ansprüche 4 bis 7, **dadurch gekennzeichnet, dass** vor dem Schritt des Überprüfens des Stummsymbols (S) (102) das Verfahren weiterhin umfasst:
- Analysieren eines Tonsignals, das von der externen Audio/VideoVorrichtung (E) stammt (105);
- Überprüfen des Vorhandenseins eines plötzlichen oder abrupten Lautstärkeabfalls während eines vorher festgelegten Zeitraums (106);
- Analysieren von zumindest einem Bild, das auf dem Anzeigesystem (D) während eines vorher festgelegten Zeitraums angezeigt wird (101), falls ein plötzlicher oder abrupter Lautstärkenabfall vorhanden ist.

## Revendications

1. Système d'affichage (D), qui comprend au moins une sortie vidéo et au moins une entrée externe qui est capable de recevoir un signal audio/vidéo externe d'un dispositif audio/vidéo externe (E), **caractérisé en ce que** ledit système d'affichage (D) comprend en outre :
- un moyen pour traiter au moins une trame vidéo reçue dudit dispositif audio/vidéo externe (E) et pour détecter un symbole de sourdine (S), qui est montré sur ledit système d'affichage (D) en tant qu'affichage d'écran lorsque ledit dispositif audio/vidéo externe (E) est mis en sourdine, compris dans ladite trame vidéo ;
- un moyen pour mettre en sourdine la sortie audio du système d'affichage (D) en cas de détection dudit symbole de sourdine (S).

2. Système d'affichage (D) selon la revendication 1, **caractérisé en ce que** ledit système d'affichage (D) comprend en outre un moyen pour détecter un signal infrarouge provenant d'un dispositif de commande à distance du dispositif audio/vidéo externe (E) et pour activer ledit moyen pour traiter au moins une trame vidéo pour détecter un symbole de sourdine (S) compris dans ladite trame vidéo.

3. Système d'affichage (D) selon la revendication 1 ou 2, **caractérisé en ce que** ledit système d'affichage (D) comprend en outre un moyen pour détecter des signaux sonores entrant dans le système d'affichage (D) en provenance du dispositif audio/vidéo externe (E) pour détecter un changement brusque de niveau sonore du dispositif audio/vidéo externe (E) et activer ledit moyen pour traiter au moins une trame vidéo pour détecter un symbole de sourdine (S) compris dans ladite trame vidéo.

4. Procédé de mise en sourdine automatique pour un système d'affichage (D), auquel est connecté au moins un dispositif audio/vidéo externe (E), **caractérisé en ce que** ledit procédé comprend les étapes suivantes :
- analyse d'au moins une trame d'image reçue dudit dispositif audio/vidéo externe et montrée sur le système d'affichage (D) (101)
- vérification de l'apparition d'un symbole de sourdine (S), qui est montré sur ledit système d'affichage (D) en tant qu'affichage d'écran lorsque ledit dispositif audio/vidéo externe (E) est mis en sourdine, dans la trame d'image (102)
- mise en sourdine d'une sortie audio du système d'affichage (107) en cas d'apparition dudit symbole de sourdine (S) dans la trame.

5. Procédé selon la revendication 4, **caractérisé en ce que**, après l'étape de mise en sourdine du système d'affichage (107), ledit procédé comprend en outre les étapes suivantes :
- analyse d'au moins une seconde trame montrée sur le système d'affichage (D) (101)
- vérification de l'apparition d'un symbole de sourdine (S) dans la trame d'image (102)
- interruption de la mise en sourdine de la sortie audio du système d'affichage (D) en cas de non-apparition dudit symbole de sourdine dans la trame.

6. Procédé selon la revendication 4 ou 5, **caractérisé en ce que**, avant l'étape de vérification du symbole de sourdine (S) (102), ledit procédé comprend en outre les étapes suivantes :
- vérification de l'existence d'un signal infrarouge transmis par un dispositif de commande à distance du dispositif audio/vidéo externe (E)
- analyse d'au moins une trame d'image reçue dudit dispositif audio/vidéo externe (E) et montrée sur le système d'affichage (D) pendant une période prédéterminée (101) en cas d'existence d'un signal infrarouge.

7. Procédé selon la revendication 4, 5 ou 6, **caractérisé en ce que**, après l'étape de vérification du symbole de sourdine (S) (102), ledit procédé comprend en outre les étapes suivantes :
- analyse d'un signal sonore provenant du dispositif audio/vidéo externe (E) (105) si un symbole de sourdine (S) est détecté
- vérification de l'apparition d'une chute brusque de niveau sonore pendant une période prédéterminée (106)
- mise en sourdine de la sortie audio du système d'affichage (D) (107) en cas d'apparition d'une chute brusque de niveau sonore.

8. Procédé selon la revendication 4, 5, 6 ou 7, **caractérisé en ce que**, avant l'étape de vérification du symbole de sourdine (S) (102), ledit procédé comprend en outre les étapes suivantes :
- analyse d'un signal sonore provenant du dispositif audio/vidéo externe (E) (105)
- vérification de l'apparition d'une chute brusque de niveau sonore pendant une période prédéterminée (106)
- analyse d'au moins une trame montrée sur le système d'affichage (D) pendant une période prédéterminée (101) en cas d'apparition d'une chute brusque de niveau sonore.
